# EUROPEAN PATENT APPLICATION

(11) **EP 2 071 763 A1**
(43) Date of publication of application: **17.06.2009**
(21) Application number: 08164866.9
(22) Date of filing: 23.09.2008
(51) Int. Cl.: H04L 12/14, H04L 12/28, H04L 12/56

(54) **Method, system and agent server for charging data services**

(30) Priority: 12.12.2007 CN 200710179367
(71) Applicant: Huawei Technologies Co., Ltd., Longgang District, Shenzhen Guangdong 518129 (CN)
(72) Inventor: Fu, Hanqiang, Shenzhen Guangdong 518129 (CN)
(74) Representative: Hengelhaupt, Jürgen

(57) **Abstract**

The present invention relates to a method, a system and an agent server for charging of data services. The embodiments of the present invention receive a data service charging request of a user from a data service control NE, and search for the home OCS according to pre-configured user routing information; send the data service charging request to the home OCS of the user, and cause the home OCS of the user to charge according to the data service charging request. The embodiments of the present invention implement charging of data services, reduce system load and workload, simplify the OCS, reduce the update difficulty, and enhance the system upgrade.

## Description

### FIELD OF THE INVENTION

This invention relates to a communication technology, and in particular, to a method, a system and an agent server for charging of data services.

### BACKGROUND

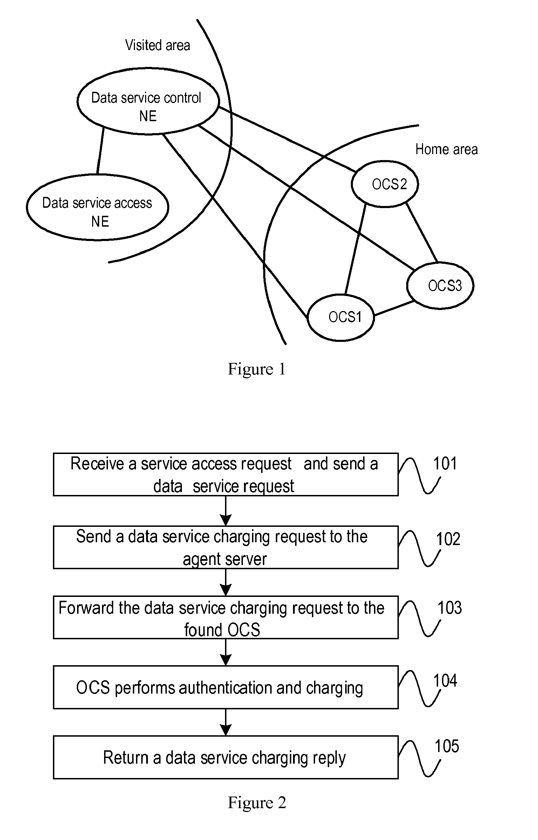

As shown in Figure 1, in the current practice, a data service charging system includes a data service control network element (NE) in a visited area, a data service access NE and an Online Charging System (OCS) in a home area. The data service control NE is adapted to implement authentication control for data services when the user in the visited area uses data services, and set up a connection with the OCS in the home area to implement real-time charging of data services; the data service access NE is adapted to enable the user roaming in the visited area to access the network, and help the data service control NE monitor the state of using the data service; the OCS is adapted to store an account information of the real-time charging user, and, when receiving a real-time data service charging request from the data service control NE, perform authentication and charging for the user and return an answer.

In the current practice, the process of real-time charging for data services mainly includes: when the user roams to the visited area, the user accesses the network through the data service access NE to use the data services such as General Packet Radio Service (GPRS); when the user uses data services, the data service control NE in the access area originates a real-time data service charging request to the OCS, and the OCS in the home area performs authentication and charging according to the account information of the user.

In the current practice, an account information of all users are stored separately in different OCSs due to huge data quantity. As shown in Figure 1, the home area contains multiple OCSs such as OCS1, OCS2 and OCS3. In order to find the account information of the user to be charged directly, each data service control NE in the visited area needs to be directly connected to all OCSs in the home area; and connections are needed to be set up between all OCSs in the home area. In this way, when an OCS receives a real-time data service charging request from a user outside this OCS, the OCS can get connected with the home OCS of the user through a remote message interface for the purpose of authentication and charging.

The defects of the present technology are as follows:
1. In order to balance the load on the equipment in the existing network, the operator usually needs to cut over or migrate the account information, for example, migrate the account information of OCS1 to OCS2. After cutover or migration, the data service control NE in other visited areas needs to modify the routing data of the user, for example, modify OCS1 to OCS2, thus adding load of system maintenance and increasing extra workload;
2. It is difficult to ensure to change the routing data synchronously after the network settings of different visited areas are cut over or migrated. Therefore, the present technology, in order to find the corresponding OCS according to the existing routing data, each data service control NE needs to be directly connected to all OCSs in the home area, connections are needed to be set up between all OCSs in the home area, and each OCS needs to have the capability of searching for account information. Consequently, the networking structure is rather complicated, information interaction is more difficult, and the OCS is more complex.

### SUMMARY

The present invention aims to provide a data service charging technology which simplifies the system architecture and facilitates networking maintenance.
For such purposes, an embodiment of the present invention is to provide a method of charging for data services, includes:
receiving a data service charging request of a user;
searching for a home Online Charging System, OCS, according to the data service charging request and pre-configured user routing information; and
sending the data service charging request to the home OCS of the user so that the home OCS of the user could charge according to the data service charging request.

For the foregoing purposes, another embodiment of the present invention is to provide an agent server, including:
a first means, adapted to receive data service charging request of a user;
a second means, adapted to search for a home OCS of a user according to the data service charging request and the pre-configured user routing information; and
a third means, adapted to send the data service charging request to the home OCS of the user.

For the foregoing purposes, another embodiment of the present invention is to provide a charging system of data services, including:

a data service control NE, configured to forward a data service access request from a user;

an agent server mentioned above, configured to receive the data service access request, and send the data service charging request to a home OCS of the user among at least one OCS in the home area; and

the at least one OCS, configured to perform charging for the user.

Since an agent server provided by the embodiments of the present invention is adapted to search for the home OCS of the user, the system is free from the trouble of modifying routing data of other areas throughout the network when cutting over or migrating the account information of a user in the home area, thus reducing the system load and workload. After the agent server is put into use, the OCSs in the home area are not necessarily interconnected with each other, thus simplifying the system. Moreover, each OCS does not need to be capable of searching for the user account information, thus reducing the complexity of the OCS.

### BRIEF DESCRIPTION OF THE DRAWINGS

Figure 1 shows the architecture of a present real-time charging system of data services.

Figure 2 is a flowchart of the method of charging for data services according to an embodiment of the invention.

Figure 3 is a signaling diagram of charging for MMS services according to an embodiment of the invention.

Figure 4 is a flowchart of the method of charging for data services according to an embodiment of the invention.

Figure 5 is a signaling diagram of charging for MMS and GPRS services according to an embodiment of the invention.

Figure 6 shows a simple architecture of a charging system for data services according to an embodiment of the invention.

Figure 7 shows a simple architecture of the agent server according to an embodiment of the invention.

### DETAILED DESCRIPTION

In the following, embodiments of the present invention are described by referring to the attached drawings.

An embodiment as shown in Figure 2 provides a method of charging for data services including the steps hereinafter.

Step 101: A data service access NE in a visited area sends a data service request to a data service control NE in the visited area after receiving a service access request of a user.

When the user sends a multimedia message, the data service access NE may be a Service GPRS Supporting Node (SGSN) and the data service control NE may be a Multimedia Messaging Service Center (MMSC). Specifically, the SGSN sends a multimedia service request to the MMSC after receiving a multimedia message of the user, namely, reporting to the MMSC the multimedia message to be sent.

Step 102: The data service control NE sends a data service charging request to the agent server in the home area after receiving the data service request.

Specifically, the agent server may be a Diameter Credit Control (DCC) agent server. In the case of MultiMedia Service (MMS), the MMSC sends an MMS real-time deduction request to the DCC agent server after receiving an MMS service request.

Step 103: The agent server searches for the home OCS of the user among the OCSs in the home area according to the charging number carried in the data service charging request, and forwards the data service charging request to the home OCS of the user.

Routing information of the user should be pre-configured in the agent server, so that the agent server can find the home OCS of the user by the routing information.

Specifically, in the case of MMS, this step may be that, the DCC agent server searches for the home OCS of the user among the OCSs in the home area according to the charging number carried in the received MMS real-time deduction request. The OCS is a system located in the home area, and stores the account information of the user attributable to the OCS, for example, charging number. In this embodiment, the multiple OCSs in the home area may not be connected with each other, but are all connected with agent server directly.

Specifically, in the case of forwarding data service charging requests, the DCC agent server converts the MMS real-time deduction request into a message of the Credit Control Request (CCR) format, namely, into an MMS real-time deduction CCR message, and then forwards the MMS real-time deduction CCR message to the OCS.

Step 104: The OCS performs authentication and charging for the user according to the received data service charging request. Specifically, in the MMS service, this step may be that, the OCS performs authentication and charging for the user according to the MMS real-time deduction request.

Step 105: The real-time charging for the user is finished after step 104. Additionally, as required, the OCS may return a data service charging answer to the agent server; the agent server forwards the data service charging answer to the data service control NE; and the data service control NE sends a data service answer to the data service access NE; and the data service access NE forwards the answer to the user, notifying the user of charging completion.

Specifically in the case of MMS, this step may be that, the OCS returns an MMS real-time deduction answer to the DCC agent server; the DCC agent server forwards the MMS real-time deduction answer to the MMSC; and the MMSC sends an MMS answer to the SGSN, notifying the user that the MMS message is sent.

Specifically, in the case of returning a data service charging answer, the OCS may return a message of the Credit Control Answer (CCA) format first. Namely, the OCS converts the message into an MMS real-time deduction CCA message, and then the DCC agent server converts the MMS real-time deduction CCA message into an MMS real-time deduction answer and forwards the message to the MMSC.

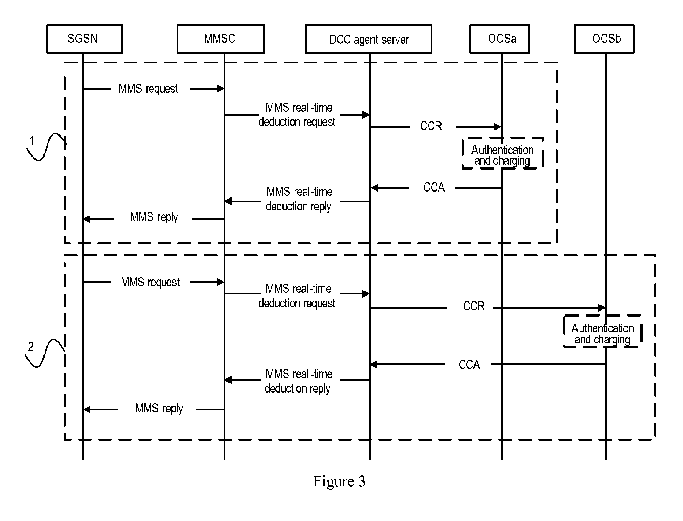

Figure 3 is a signaling flowchart of the data service real-time charging method applied to the MMS according to an embodiment of the invention. The dotted line block 1 shows a signaling flow of real-time charging for "user a". An account information of "user a" is saved in the OCSa. Therefore, OCSa performs authentication and charging for "user a". Accordingly, the dotted line block 2 shows a signaling flow of real-time charging for "user b". An account information of "user b" is saved in OCSb. Therefore, the OCSb performs authentication and charging for "user b".

The real-time charging for MMS is implemented through the method under the foregoing embodiment of the invention. Since an agent server is adapted to search for the home OCS of the user, the system needs to modify the routing information of the user in the agent server, and is free from the trouble of modifying routing data of other areas throughout the network when cutting over or migrating the account information of a user in the home area, thus reducing the system load and workload. After the agent server is put into use, the OCSs in the home area are not necessarily interconnected with each other but are connected with the agent server, thus simplifying the system. Moreover, each OCS does not need to be capable of searching for the user account information, thus reducing the complexity of the OCS. Furthermore, the agent server can convert various received protocol requests into protocol requests identifiable to the OCS. Therefore, when a new protocol is used in the home area or visit area to perform authentication and charging for the data service, the original real-time charging process may be implemented by adding the corresponding protocol conversion function on the agent server, without updating the OCS equipment. This reduces the update difficulty and enhances the system upgrade.

Another embodiment of a method under the present invention is detailed in the context.

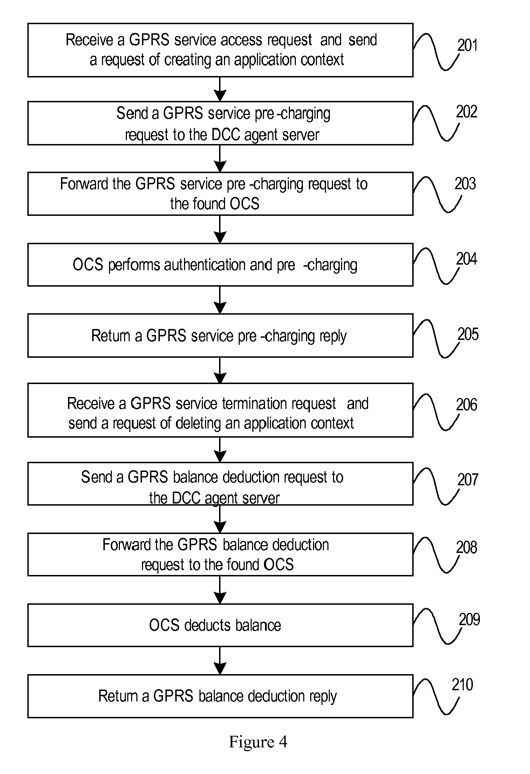

The embodiment mentioned above describes a method of real-time charging for data services, taking the MMS as an example. This embodiment further describes a method of real-time charging for data services, taking GPRS as an example. As shown in Figure 4, the process of real-time charging for GPRS services includes the steps hereinafter.

Step 201: After receiving the GPRS access request of the user, the SGSN sends a request of creating application context to the GGSN, requesting to set up a GPRS connection.

The SGSN works as data service access NE in the network, and the Gateway GPRS Support Node (GGSN) works as a data service control NE in the network.

Step 202: The GGSN sends a GPRS pre-charging request to the DCC agent server.

The GPRS pre-charging request is adapted to estimate the balance of the user before charging and check whether the balance is enough for payment. For example, if the user requests to download a 10 M file , but the balance is not enough for paying for the download, then the system will stop the service without charging.

Step 203: The DCC agent server searches for the home OCS of the user among the OCSs in the home area according to the charging number carried in the received GPRS pre-charging request, and forwards the GPRS pre-charging request to the OCS.

Specifically, in the case of forwarding a GPRS pre-charging request, the DCC agent server converts the GPRS pre-charging request into a message of the Credit Control Request (CCR) format, namely, into a GPRS pre-charging CCR message, and then forwards the message to the OCS.

Step 204: The OCS performs authentication and pre-charging for the user according to the GPRS pre-charging request.

Step 205: After authentication and pre-charging, as specifically required, the OCS returns a GPRS pre-charging answer to the DCC agent server, indicating the pre-charging result; the DCC agent server forwards the GPRS pre-charging answer to the GGSN; the GGSN sends a response of creating application context to the SGSN according to the GPRS pre-charging answer, notifying the SGSN that the context is created successfully and the GPRS service may be started.

Specifically, in the case of returning a GPRS pre-charging answer, the OCS may return a message of the Credit Control Answer (CCA) format first. Namely, the OCS converts the message into a GPRS pre-charging CCA message, and then the DCC agent server converts the GPRS pre-charging CCA message into a GPRS pre-charging answer, and forwards the message to the GGSN.

Step 206: After receiving the GPRS termination request of the user, the SGSN sends a request of deleting application context to the GGSN.

The GPRS termination request is sent to the SGSN after the user finishes the GPRS service, requesting to finish the current GPRS service connection.

Step 207: The GGSN sends a GPRS balance deduction request to the DCC agent server.

The GPRS balance deduction request is a request of deducting the account balance in real time according to the GPRS traffic actually generated by the user.

Step 208: The DCC agent server searches for the home OCS of the user among the OCSs in the home area according to the charging number carried in the received GPRS deduction request, and forwards the GPRS deduction request to the OCS.

Specifically, in the case of forwarding a GPRS balance deduction request, the DCC agent server converts the GPRS balance deduction request into a message of the Credit Control Request (CCR) format, namely, into a GPRS balance deduction CCR message, and then forwards the message to the OCS.

Step 209: The OCS deducts the account balance of the user according to the GPRS balance deduction request.

Step 210: After deducting the account balance, as specifically required, the OCS returns a GPRS deduction answer to the DCC agent server, indicating the deduction result; the DCC agent server forwards the GPRS deduction answer to the GGSN; the GGSN sends a response of deleting application context to the SGSN according to the GPRS deduction answer, notifying the SGSN that the balance is deducted and the GPRS service is finished.

Specifically, in the case of returning a GPRS deduction answer, the OCS may return a message of the Credit Control Answer (CCA) format first. Namely, the OCS converts the message into a GPRS deduction CCA message, and then the DCC agent server converts the GPRS deduction CCA message into a GPRS deduction answer, and forwards the message to the GGSN.

The real-time charging for GPRS is implemented through the method under the foregoing embodiment of the invention. Since an agent server is adapted to search for the OCS that has the corresponding account information, the system is free from the trouble of modifying routing data of other home areas throughout the network when cutting over or migrating the account information of a user in the home area, thus reducing the system load and workload. After the agent server is put into use, the OCSs in the home area are not necessarily interconnected with each other if they are connected with the agent server, thus simplifying the system. Moreover, each OCS does not need to be capable of searching for the account information, thus reducing the complexity of the OCS. Furthermore, the agent server may convert various received protocol requests into protocol requests identifiable to the OCS. Therefore, when a new protocol is used in the home area or visit area to perform authentication and charging, the original real-time charging process may be implemented by adding the corresponding protocol conversion function on the agent server, without updating the OCS equipment. This reduces the update difficulty and enhances the system upgrade.

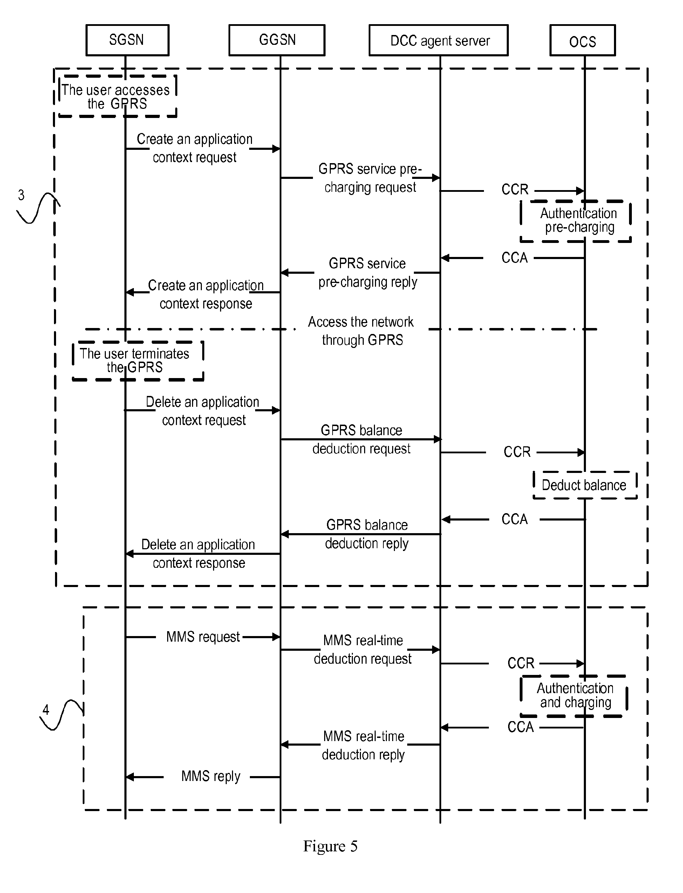

It is understandable that the method under the present invention is not limited to one of the data services mentioned above although the embodiments of the invention mentioned above expound the real-time charging processes of MMS and GPRS services respectively. In fact, real-time charging may be implemented for MMS, GPRS and other data services concurrently through an agent server. Figure 5 shows the signaling diagram of concurrent real-time charging for MMS and GPRS services. The dotted line block 3 shows the signaling flow of real-time charging for GPRS services, and the dotted line block 4 shows the signaling flow of real-time charging for MMS services.

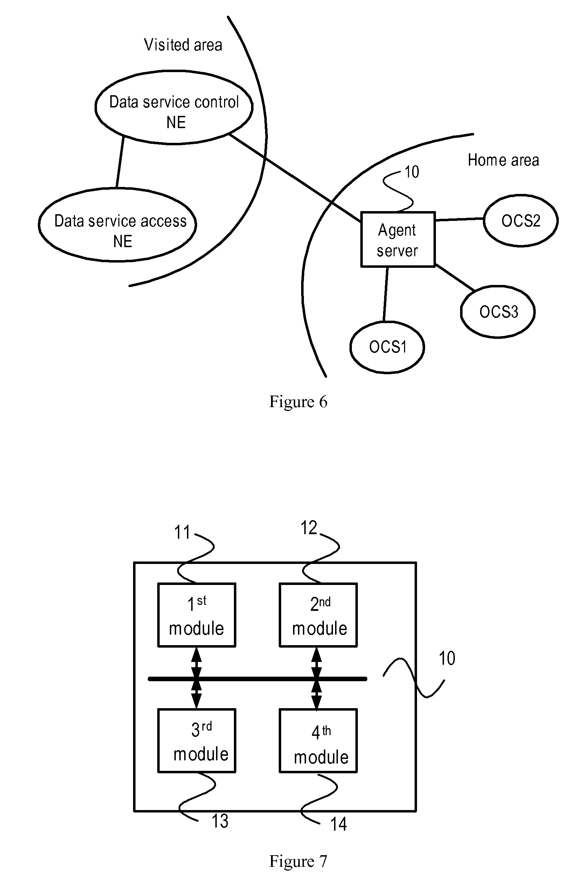

In the following, an embodiment of the invention provides a real-time charging system of data services. As shown in Figure 6, the charging system includes a data service control NE in the visited area, a data service access NE connected with the data service control NE, and multiple Online Charging Systems (OCSs) in the home area such as OCS1, OCS2 and OCS3. The charging system also includes an agent server 10, connected with each OCS in the home area, and with the data service control NE in the visited area.

The data service access NE receives the data service access request of the user, and sends a data service request to the data service control NE according to the data service access request. After receiving the data service request, the data service control NE sends a data service charging request to the agent server. According to the charging number carried in the data service charging request, the agent server searches for the home OCS of the user among the OCSs in the home area, and sends the data service charging request to the home OCS of the user. According to the data service request, the home OCS of the user performs authentication and charging for the user. Additionally, the agent server may convert the data service request message into a format identifiable to the OCS of the user, for example, convert the data service charging request into a data service CCR message.

Further, after finishing the charging, the home OCS of the user may send a data service charging answer to the agent server. The agent server forwards the data service charging answer to the data service control NE, and the data service control NE forwards the data service charging answer to the data service access NE. Additionally, the agent server may perform protocol conversion for the data service charging answer, and convert it into a format identifiable to the data service control NE, for example, convert the data service charging CCA into a data service charging answer.

Figure 7 shows the structure of the agent server, which includes a first module 11, a second module 12, and a third module 13.

The first module 11 receives the data service charging request from the data service control NE. The second module 12 searches for the home OCS of the user who originates the service access request among the OCSs in the home area according to the charging number carried in the data service charging request received by the first module 11. The third module 13 forwards the data service charging request received by the first module 11 to the OCS found by the second module 12, and the OCS performs authentication and charging.

Further, the third module 13 may receive a data service charging answer from the home OCS of the user which is found by the second module 12, and the first module 11 may forward the data service charging answer to the data service control NE.

Moreover, the agent server 10 may also be a DCC agent server. In order to implement protocol conversion, the agent server 10 may further include a fourth module 14. The fourth module 14 is adapted to convert the data service charging request received by the first module 11 into a data service charging CCR message.

Further, the third module 13 may receive a data service charging CCA message from the home OCS of the user, and forward the data service charging CCA message to the fourth module 14; The fourth module 14 convert the data service charging CCA message into a data service charging answer, which is then forwarded to the first module 11. Then the first module 11 forward the data service charging answer to data service control NE.

In this way, various received protocol requests are converted into the protocol requests identifiable to the OCS. Therefore, when a new protocol is used in the home area or visited area to perform authentication and charging for the data service, the original real-time charging process may be implemented by adding the corresponding protocol conversion function on the agent server, without updating the OCS equipment. This reduces the update difficulty and enhances the system upgrade.

The real-time charging for data services is implemented through the system under the foregoing embodiment of the invention. Since an agent server is adapted to search for the home OCS that has the corresponding account information, the system is free from the trouble of modifying routing data of other areas throughout the network when cutting over or migrating the account information of a user in the home area, thus reducing the system load and workload. After the agent server is put into use, the OCSs in the home area are not necessarily interconnected with each other if they are connected with the agent server, thus simplifying the system. Moreover, each OCS does not need to be capable of searching for the account information, thus reducing the complexity of the OCS.

Embodiments within the scope of the present invention also include computer-readable media for carrying or having computer-executable code, computer-executable instructions, computer-readable instructions, or data structures stored thereon. Such computer-readable media may be any available media, which is accessible by a general-purpose or special-purpose computer system. By way of example, and not limitation, such computer-readable media may comprise physical storage media such as RAM, ROM, or other optical disk storage, magnetic disk storage or other magnetic storage devices, or any other media which can be used to carry or store desired program code means in the form of computer-executable instructions, computer-readable instructions, or data structures and which may be accessed by a general-purpose or special-purpose computer system.

Although detailed description is made for the foregoing embodiments of this invention to describe rather than restrict the technical solution of the present invention, it is to be understood that those skilled in the field can make various modifications and equivalent substitutions to the technical solutions under the foregoing embodiments of the invention without departing from the spirit and scope of this invention.

## Claims

1. A data service charging method, comprising:
receiving a data service charging request of a user;
searching for a home Online Charging System, OCS, according to the data service charging request and pre-configured user routing information; and
sending the data service charging request to the home OCS of the user so that the home OCS of the user could charge according to the data service charging request.

2. The data service charging method according to claim 1, **characterized in that** the searching for the home OCS according to the data service charging request and pre-configured user routing information comprises:
searching for user's routing information from the pre-configured user routing information according to the user charging number carried in the data service charging request; and
searching for the home OCS of the user according to the user's routing information.

3. The data service charging method according to claim 1 or 2, **characterized in that** before the sending the data service charging request to the home OCS of the user the method further comprises,
converting the data service charging request into the message identifiable to the home OCS of the user.

4. The data service charging method according to claim 1, 2 or 3, **characterized by** further comprising,
receiving a data service charging answer from the home OCS of the user, and
sending the data service charging answer to a data service control NE.

5. The data service charging method according to claim 4, **characterized in that** before the sending the data service charging answer to a data service control NE, the method further comprises,
converting the data service charging answer into the message identifiable to the data service control NE.

6. The data service charging method according to claim 5, **characterized in that** converting the data service charging request into the message identifiable to the home OCS of the user comprises,
converting the data service request into the data service charging Credit Control Request , CCR, message;
wherein receiving the data service charging answer from the home OCS of the user, comprises,
receiving the data service charging Credit Control Request, CCA, message from the home OCS of the user.

7. The data service charging method according to claim 6, **characterized in that** converting the data service charging answer into the message identifiable to the data service control NE comprises,
converting the data service charging CCA message into the data service charging answer.

8. The data service charging method according to any one of claims 1 to 7, **characterized in that,** the data service charging request is an MMS charging request.

9. The data service charging method according to any one of claims 1 to 7, **characterized in that,** the data service charging request is a GPRS charging request.

10. An agent server, comprising:
a first means, adapted to receive data service charging request of a user;
a second means, adapted to search for a home OCS of a user according to the data service charging request and the pre-configured user routing information;
a third means, adapted to send the data service charging request to the home OCS of the user.

11. The agent server according to claim 10, **characterized in that** the third means is further adapted to receive data service charging answer from the home OCS of the user, and send the data service answer to the first means;
wherein the first means is further adapted to send the data service answer to the data service control NE.

12. The agent server according to claim 10 or 11, further comprising:
a fourth means, adapted to receive the data service charging request from the first means, convert the data service charging request into a message identifiable to the home OCS of the user, forward the message identifiable to the home OCS of the user to the third means;
and adapted to receive the data service charging answer from the third means, convert the data service charging answer into a message identifiable to the data service control NE, forward the message identifiable to the data service control NE to the first means.

13. A data service charging system, comprising:
a data service control NE, configured to forward a data service access request from a user;
an agent server according to any one of claims 10 to 12, configured to receive the data service access request, and send the data service charging request to a home OCS of the user among at least one OCS in the home area; and
the at least one OCS, configured to perform charging for the user.

14. A computer program product, **characterized in**, comprising computer program code portions, which, when executed by a computer, cause the computer to perform all the steps of any one of claims 1 to 9.
